# EUROPEAN PATENT SPECIFICATION

(11) **EP 1 120 931 B1**
(45) Date of publication and mention of the grant of the patent: **12.10.2005**
(21) Application number: 00440019.8
(22) Date of filing: 25.01.2000
(51) Int. Cl.: H04L 1/00

(54) **A method for enhancing the capacity of a cellular radio-communication system and corresponding system**
Verfahren zum Erhöhen der Kapazität eines zellularen Funkkommunikationssystems und zugehörendes System
Procédé pour l'augmentation de la capacité d'un système cellulaire de radiocommunication et système correspondant

(43) Date of publication of application: 01.08.2001
(73) Proprietor: ALCATEL, 75008 Paris (FR)
(72) Inventor: Balech, Jean-Pierre, FR-92160 Antony (FR)
(74) Representative: Rausch, Gabriele

(56) References cited:
- EP-A- 0 845 916
- US-A- 5 828 695
- VADGAMA S K: "ADAPTIVE BIT RATE TRANSMISSION FOR PERSONAL COMMUNICATIONS" PROCEEDINGS OF THE NORDIC SEMINAR ON DIGITAL LAND MOBILE RADIO COMMUNICATIONS (DMR),FI,HELSINKI, TELECOM FINLAND, vol. SEMINAR 4, 1990, pages 1-9, XP000515571
- WEBB W T: "QAM: THE MODULATION SCHEME FOR FUTURE MOBILE RADIO COMMUNICATIONS?" ELECTRONICS AND COMMUNICATION ENGINEERING JOURNAL,GB,INSTITUTION OF ELECTRICAL ENGINEERS, LONDON, vol. 4, no. 4, 1 August 1992 (1992-08-01), pages 167-176, XP000307895 ISSN: 0954-0695

## Description

The field of the present invention is that of cellular radio-communication systems and more particularly systems supporting multiple modulation schemes.

The capacity of the cellular radio-communication system can be defined as the average bit rate per sector, a sector being viewed as a communication channel in the radio communication system. In a cellular deployment, the capacity is directly related to the carrier to interference ratio value (C/l) achieved in the different sectors of the system.
For a given modulation scheme, the demodulator performance in term of bit error rate (BER) determines the operating point of the radio communication system. Depending on the channel coding, this BER performance can be greatly improved but this should be balanced with the loss of capacity due to the overhead of the channel coding.
In the following description, we refer to the usage of two modulation schemes having different modulation efficiency, for example 4QAM and 16QAM. The modulation efficiency corresponding to the number of coded bits per symbol. The invention can also be applied to any type of modulations having different modulation efficiency.
If the BER before channel decoding at a receiver of the cellular radio communication network is lower than a predefined threshold value, for example 10⁻⁴, the use of an appropriate error correcting code, for example Reed-Solomon code, leads to a quasi error free channel after decoding. The BER lower than the predefined threshold value are obtained by ensuring different C/I values at the receiver depending on the modulation scheme used. The necessary C/I values at the receiver to get a BER of 10⁻⁴ are assumed to be 12 dB for 4QAM and 19 dB for 16QAM. These values allow an implementation margin of 2dB. If we assume that the maximum output power is reached for 4QAM, we need a 2dB more back-off for 16QAM.
Parameters to calculate the C/I at the receiver side are the position of interfering distant users, the output power amplifier, the antenna gains , the signal bandwidth and the receiver noise figure. However, if in the up-link a power control is performed, the interference level and the C/I value at a receiving base station depends mainly on the position of interfering distant end-users.

The following description analyses the capacity enhancement in the up-link direction of a radio communication system, for example a cellular system using frequency reuse, deployed with several frequency channels using the same polarization. The invention can be extended to a radio communication system deployed with frequency channels using cross-polarization. The radio communication system is assumed to use link adaptation depending on the time varying link quality.

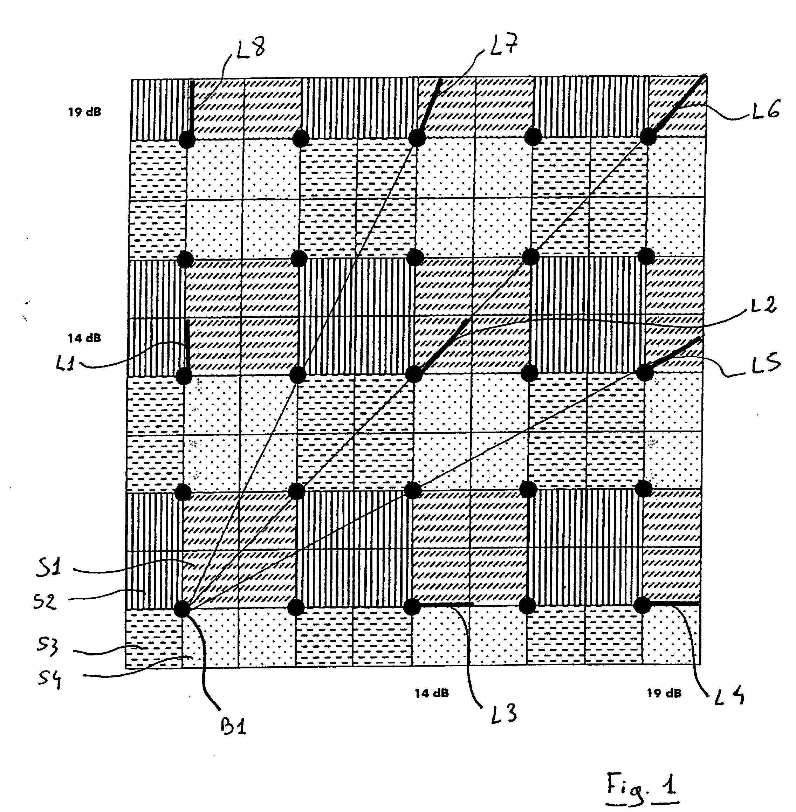

Figure 1 helps to analyze the interference level in a known cellular radio communication system using a rectangular cell pattern with 90° sectoring.
Figure 1 shows an ideal representation of a cellular system extending over an area covered by 5*5 bases stations located on a rectangular grid. The base stations are represented by heavy dots. A base station is situated in the middle of a rectangular cell divided in four 90° sectors each one supporting a different frequency channel. The different filling effects represent the different frequency channels used in the different sectors.

Let call the lower left base station of figure 1, reference base station B1. The upper right sector of the reference base station B1, called reference sector S1, uses a frequency channel represented by discontinuous lines bent to the right side of figure 1.
In the uplink, an end-user located in a given sector transmits its signal toward the base station belonging to this sector with a predefined directivity depending on the antenna of the end-user.
Possible interference in the reference sector S1 only comes from end users located in distant sectors using the same frequency channel as reference sector S1. If the antenna directivity is assumed to be very narrow, only distant end-users aligned with their corresponding base station and with the reference base station B1 generate interference in the reference sector S1. With the cell pattern described in figure 1, interfering end-users located along bold portions of lines L1, ..., L8 in sectors of distant base stations using the same frequency channel as reference sector S1 generate interference at the reference base station B1.
The level of interference depends on the distance between the interfering end-users and the reference base station B1. Three locations along bold portions of line L1, L2, L3 give a C/I up to 14 dB if interfering end-users are located on them. Five more locations represented by bold portions of line L4, ..., L8 give a C/I of 19 dB and seven locations not represented on figure 1 an interference level of 22dB below the carrier level. Depending on the traffic at these locations, the end-users located in the reference sector S1 are affected by these interfering end-users.

In prior art solutions, the worst case is considered to determine the interference level to be taken into account for the whole sector. In that case a C/I of 14dB is the worst case. To ensure a BER of 10⁻⁴ before decoding the use of a 4QAM in the sector can be appropriate. The disadvantage of this worst case is that it is sub optimal.

As the interference level can vary quickly depending on the traffic along the bold lines L1, ..., L8 in the sectors using the same frequency channel as the reference sector S1, a possible solution to enhance the radio-communication system capacity would consist in adapting the link capacity to interference level in real time.
This solution could be achieved by the use of adaptive antennas. This kind of product is, however, not yet available and seems not to be available soon for the millimetric frequency range.

EP-A-0 845 916 discloses the determination of a maximum range for various modulation types the allocation of modulation types according to desired range. In US-A-5 828 695, the quality of a channel is assessed before a modulation type is allocated. The document Vadgama S K: "Adaptive bit rate transmission for personal communications" Proceedings of the Nordic seminar on digital land mobile radio communications (DMR), FI, Helsinki, Telecom Finland, vol. seminar 4, 1990, pages 1-9, XP000515571 discloses the establishment of concentric zones in large cells. Different modulation schemes are used in different zones.

A particular object of the present invention is to provide a method for enhancing the capacity of a cellular radio communication system with reduced needs of real-time requirements.

This object, and other that appear below, are achieved by a method of enhancing the capacity of a cellular radio-communication system, each cell of which comprising a base station and end-users able to communicate with the base station by using a first modulation type over a first communication channel. Any cell experiences an interference level from distant end-users communicating with their corresponding distant base station by using the same first communication channel. According to the method of the invention, the end-users located in at least one domain of the cell in which the interference level is lower than a predefined interference level communicate with the base station by using a second modulation type over a second communication channel, where the second modulation type has a higher efficiency than said first modulation type. The size and location of the domains depend on the antenna directivity of the end-users and on the relative positions of the distant base stations and the base station.
An advantage of the present invention is to enhance the capacity of a cellular network with low costs.
The present invention also concerns a cellular system according to claim 6.

Other characteristics and advantages of the invention will appear on reading the following description of a preferred implementation given by way of non limiting illustration, and from the accompanying drawings in which:
Figure 1 is a known cellular radio communication system using a rectangular cell pattern with 90° sectoring;
Figure 2 shows a cell of the cellular system as showed in figure 1 supporting two modulations types on two communication channels according to the present invention;
Figure 3 shows a cell of the cellular system as showed in figure 1 supporting two modulations types on four communication channels according to the present invention.

As already described above, the bold portions of lines, L1, ..., L8 represented in figure 1 are situated on five directions which are source of interference and incompatible with the use of a higher efficiency modulation. On the contrary other directions are affected by very low interference and are compatible with the use of a higher efficiency modulation. The five above mentioned directions in reference sector S1, and an area around these directions (to take into account the non negligible antenna directivity; a possible antenna directivity is 6°), are preferably assigned to a dedicated first communication sub-channel used. The modulation used on this first sub-channel is 4QAM. The other regions are preferably assigned to a second sub channel different from the first sub-channel. The modulation used on this second sub-channel is preferably 16 QAM.
With an antenna directivity of 6° (worst case) at the end-user side, the portions of the sector S1 not suitable for the use of 16QAM, i.e. experiencing a C/l lower than 19dB have been calculated. This is shown in figure 2. Figure 2 represents the reference sector S1 of figure 1.
The users located in the five sub-areas SA1, ..., SA5 use the first communication sub-channel with 4QAM modulation and the end-users located in the rest of the sector use the second communication sub-channel with the 16QAM modulation. Preferably, the communication sub-channels used in the reference sector S1 as shown in figure 1 correspond each one to the half of the bandwidth allocated in prior art system to a sector.
The total area where a 16QAM modulation can be used represents 54% of the cell area, the other 46% corresponding to a area where the 4 QAM modulation has to be used. If the users are uniformly distributed in the cell, the capacity enhancement is equal to 1x0.54+2x0.46=1.46 compared to the 4 QAM capacity being taken as unit. The rain effect has little influence on the value of this coefficient.

In another embodiment of the invention, the original frequency channel is divided in four sub-channels having each one 1/4 of the bandwidth of the whole bandwidth allocated in prior art systems to a sector. The reference sector S1 is divided in four types of regions.

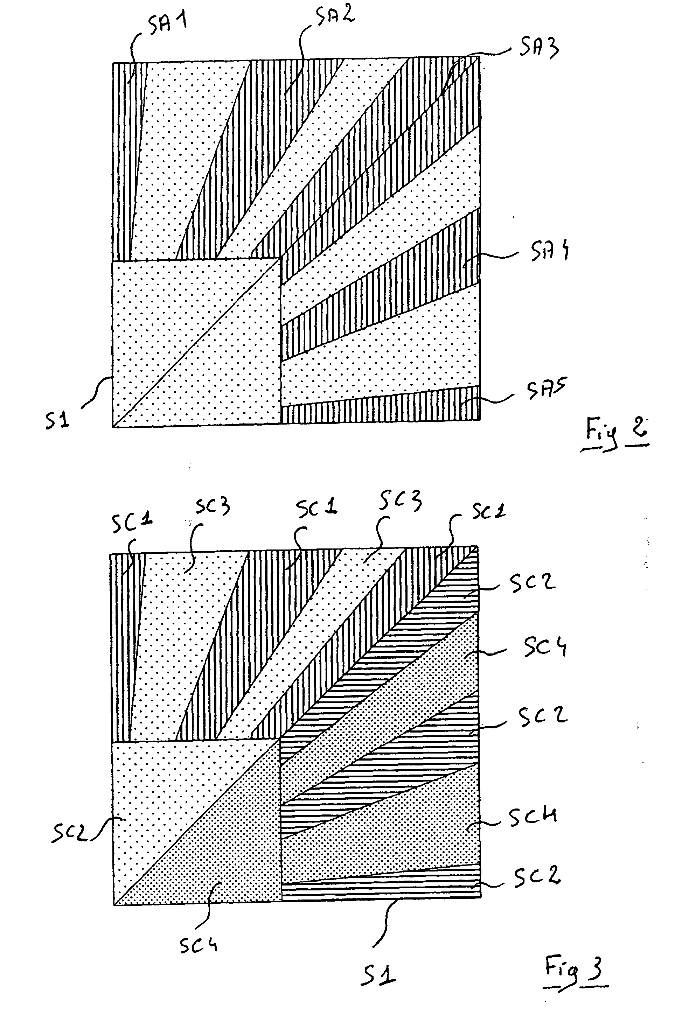

Figure 3 represents the reference sector S1, the two types of striped areas are the areas where an end-user can experience a high level of interference from other distant sectors. The end-users inside these striped areas are then assigned to 2 specific sub-channels using a 4 QAM modulation scheme. The two type of punctured areas are the areas where a end-user can experience smallest level of interference from other distant sectors. These punctured areas can then use the further two communication sub-channels with a 16 QAM modulation scheme.

As showed in the above description, the present invention provides a method to enhance the capacity in the up-link of a cellular radio communication network by assigning some parts of the sectors to dedicated sub-channels and using both 4QAM and16 QAM modulations.
The invention also apply to any cellular radio communication network having any topology provided the location of the base station and the sectors of the cell are known.

The cellular radio communication system according to the invention comprises preferably fixed end-users communicating over a radio link with their corresponding base station. The use of the modulation depending only on the location of the fixed end-user. The end-user may then only support the modulation type used in the domain where it is located.

In another embodiment of the invention, the cellular radio communication system comprises mobile end-users which can move from one domain using a first modulation to another domain using a second modulation. In that case, the system should also support means for having the terminal switch from an first modulation type to another modulation type according to the place where it is currently moving to. This may be achieved by using a positioning system, as for example GPS, to follow the moves of the end-users and couple the results of the positioning system with a signaling mechanism to communicate to the end-user if it has to change the used modulation type. The base station in with the end-user is currently located or the base station in association with the mobile switching center may be responsible for this procedure.
The idea of the invention can also be applied to the down link direction of a cellular radio communication network.
The idea of using sub-channeling an allocated bandwidth can be understood as described in the preferred embodiment of the invention as a frequency sub-channeling where the allocated bandwidth is divided in different frequency sub-channels. Another possibility can be a time sub-channeling where the allocated bandwidth is divided in several time sub-channels or a code sub-channeling where the allocated bandwidth is divided in several code sub-channels.
The invention should not be restricted to the use of two different modulations having different efficiency. More than two modulations having different modulation efficiencies may be envisaged.

## Claims

1. A method for enhancing the capacity of a cellular radio-communication system, a cell of said system comprising a base station and end-users able to communicate with said base station by using a first modulation type over a first channel, said cell experiencing an interference level from distant end-users communicating with at least one distant base station by using said first communication channel, said method being **characterised in that** end-users located in at least one domain of said cell in which said interference level is lower than a predefined interference level communicate with said base station by using a second modulation type over a second communication channel, said second modulation type having a higher efficiency than said first modulation type, the size and location of said domains in said cell depending on
a) the antenna directivity of said distant end-users, and
b) on the positions of said at least one distant base stations and of said base station relative to those distant end-users which are aligned with said at least one distant base station and said base station.

2. A method according to claim 1, **characterised in that** said end-users are fixed terminals configured to use said second modulation type if they are located in said domains in which said interference level is lower than said predefined interference level and said first modulation type if not.

3. A method according to claim 1, **characterised in that** said end-users are mobile terminals able to switch between said first modulation type and said second modulation type depending on the domain they are moving to.

4. A method according to one of the claims 1 to 3, **characterised in that**, said first modulation type is 4 QAM and said second modulation type is 16QAM.

5. A method according to one of the claims 1 to 4, **characterised in that** said first and second communication channels are channels of a frequency and/or time and/or code division multiplex scheme.

6. A cellular radio-communication system, each cell of which comprising a base station and end-users able to communicate with said base station by using a first modulation type over a first communication channel, said cell experiencing an interference level from distant end-users communicating with at least one distant base station by using said first communication channel, said system being **characterised in that** end-users located in at least one domain of said cell in which said interference level is lower than a predefined interference level communicate with said base station by using a second modulation type over a second communication channel, said second modulation type having a higher efficiency than said first modulation type, the size and location of said domains in said cell depending on
a) the antenna directivity of said distant end-users, and
b) on the positions of said at least one distant base stations and of said base station relative to those distant end-users which are aligned with said at least one distant base station and said base station.

## Patentansprüche

1. Verfahren zum Erhöhen der Kapazität eines zellularen Funkkommunikationssystems, wobei eine Zelle dieses Systems eine Basisstation und Endnutzer umfasst, welche in der Lage sind, mit dieser Basisstation unter Verwendung eines ersten Modulationstyps über einen ersten Kanal zu kommunizieren, wobei die Zelle einen Störpegel von entfernten Endnutzern erfährt, die mit mindestens einer entfernten Basisstation unter Verwendung dieses ersten Kommunikationskanals kommunizieren, wobei das Verfahren **dadurch gekennzeichnet ist, dass** Endnutzer, die sich in mindestens einem Bereich der Zelle befinden, in welchem der Störpegel niedriger ist als ein vordefinierter Störpegel, mit der Basisstation unter Verwendung eines zweiten Modulationstyps über einen zweiten Kommunikationskanal Kommunizieren, wobei der zweite Modulationstyp eine höhere Effizienz aufweist als der erste Modulationstyp, wobei die Größe und die Lage der Bereiche in der Zelle abhängen von
a) der Antennenrichtwirkung der entfernten Endnutzer und
b) den Positionen der mindestens einen entfernten Basisstation und der Basisstation im Verhältnis zu denjenigen entfernten Endnutzem, die auf die mindestens eine entfernte Basisstation und die Basisstation ausgerichtet sind.

2. Verfahren nach Anspruch 1, **dadurch gekennzeichnet, dass** die Endnutzer ortsfeste Endgeräte sind, welche so konfiguriert sind, dass sie den zweiten Modulationstyp verwenden, wenn sie sich in den Bereichen befinden, in denen der Störpegel niedriger ist als der vordefinierte Störpegel, und den ersten Modulationstyp, wenn dies nicht der Fall ist.

3. Verfahren nach Anspruch 1, **dadurch gekennzeichnet, dass** die Endnutzer mobile Endgeräte sind, welche in der Lage sind, zwischen dem ersten Modulationstyp und dem zweiten Modulationstyp in Abhängigkeit von dem Bereich umzuschalten, zu dem sie sich bewegen.

4. Verfahren nach einem der Ansprüche 1 bis 3, **dadurch gekennzeichnet, dass** der erste Modulationstyp 4QAM ist und der zweite Modulationstyp 16QAM ist.

5. Verfahren nach einem der Ansprüche 1 bis 4, **dadurch gekennzeichnet, dass** der erste und der zweite Kommunikationskanal Kanäle mit einem Frequenz- und/oder Zeit- und/oder Codemultiplexverfahren sind.

6. Zellulares Funkkommunikationssystem, bei dem jede seiner Zellen eine Basisstation und Endnutzer umfasst, welche in der Lage sind, mit dieser Basisstation unter Verwendung eines ersten Modulationstyps über einen ersten Kommunikationskanal zu kommunizieren, wobei die Zelle einen Störpegel von entfernten Endnutzem erfährt, die mit mindestens einer entfernten Basisstation unter Verwendung dieses ersten Kommunikationskanals kommunizieren, wobei das System **dadurch gekennzeichnet ist, dass** Endnutzer, die sich in mindestens einem Bereich der Zelle befinden, in welchem der Störpegel niedriger ist als ein vordefinierter Störpegel, mit der Basisstation unter Verwendung eines zweiten Modulationstyps über einen zweiten Kommunikationskanal kommunizieren, wobei der zweite Modulationstyp eine höhere Effizienz aufweist als der erste Modulationstyp, wobei die Größe und die Lage der Bereiche in der Zelle abhängen von
a) der Antennenrichtwirkung der entfernten Endnutzer und
b) den Positionen der mindestens einen entfernten Basisstation und der Basis-station im Verhältnis zu denjenigen entfernten Endnutzern, die auf die mindestens eine entfernte Basisstation und die Basisstation ausgerichtet sind.

## Revendications

1. Procédé pour l'augmentation de la capacité d'un système cellulaire de radiocommunication, une cellule dudit système comportant une station de base et des utilisateurs finaux capables de communiquer avec ladite station de base en utilisant un premier type de modulation sur un premier canal, ladite cellule connaissant un niveau de brouillage provenant d'utilisateurs finaux distants communiquant avec au moins une station de base distante en utilisant ledit premier canal de communication, ledit procédé étant **caractérisé en ce que** des utilisateurs finaux, situés dans au moins un domaine de ladite cellule dans lequel ledit niveau de brouillage est inférieur à un niveau de brouillage prédéfini, communiquent avec ladite station de base en utilisant un second type de modulation sur un second canal de communication, ledit second type de modulation ayant une efficacité supérieure au dit premier type de modulation, la taille et l'emplacement dudit domaine dans la cellule dépendant de :
a) la directivité de l'antenne desdits utilisateurs finaux distants, et
b) les positions desdites - au moins une - stations de base distantes et de ladite station de base par rapport à ces utilisateurs finaux distants qui sont alignés sur ladite au moins une station de base distante et ladite station de base.

2. Procédé selon la revendication 1, **caractérisé en ce que** lesdits utilisateurs finaux sont des terminaux fixes configurés pour utiliser ledit second type de modulation s'ils sont situés dans lesdits domaines dans lesquels ledit niveau de brouillage est inférieur au dit niveau de brouillage prédéfini, et ledit premier type de modulation sinon.

3. Procédé selon la revendication 1, **caractérisé en ce que** lesdits utilisateurs finaux sont des terminaux mobiles capables de commuter entre ledit premier type de modulation et ledit second type de modulation en fonction du domaine vers lequel ils se déplacent.

4. Procédé selon l'une quelconque des revendications 1 à 3, **caractérisé en ce que** ledit premier type de modulation est 4QAM et ledit second type de modulation est 16QAM.

5. Procédé selon l'une quelconque des revendications 1 à 4, **caractérisé en ce que** lesdits premier et second canaux de communication sont des canaux d'un schéma multiple par division de fréquence et/ou de temps et/ou de code.

6. Système cellulaire de radiocommunication dont chaque cellule comporte une station de base et des utilisateurs finaux capables de communiquer avec ladite station de base en utilisant un premier type de modulation sur un premier canal de communication, ladite cellule connaissant un niveau de brouillage provenant d'utilisateurs finaux distants communiquant avec au moins une station de base distante en utilisant ledit premier canal de communication, ledit système étant **caractérisé en ce que** des utilisateurs finaux situés dans au moins un domaine de ladite cellule dans lequel ledit niveau de brouillage est inférieur à un niveau de brouillage prédéfini communiquent avec ladite station de base en utilisant un second type de modulation ayant une efficacité supérieure au dit premier type de modulation, la taille et l'emplacement desdits domaines dans la cellule dépendant de :
a) la directivité de l'antenne desdits utilisateurs finaux distants, et
b) les positions desdites - au moins une - stations de base distantes et de ladite station de base par rapport à ces utilisateurs finaux distants qui sont alignés à ladite - au moins une - station de base distante et ladite station de base.
